# EUROPÄISCHE PATENTANMELDUNG

(11) **EP 1 033 234 A2**
(43) Veröffentlichungstag der Anmeldung: **06.09.2000**
(21) Anmeldenummer: 00103775.3
(22) Anmeldetag: 23.02.2000
(51) Int. Cl.: B29D 30/06, B29C 35/02

(54) **Verfahren zur Herstellung von Gummiartikeln und nach diesem Verfahren hergestellter Gummiartikel, insbesondere Fahrzeugluftreifen**

(30) Priorität: 02.03.1999 DE 19908942
(71) Anmelder: Continental Aktiengesellschaft, 30165 Hannover (DE)
(72) Erfinder: Peter, Julius, Dr., 1130 Wien (AT)

(57) **Zusammenfassung**

Die Erfindung betrifft ein Verfahren zur Herstellung von Gummiartikeln aus vulkanisierbaren Kautschukmischungen, welche unter dem Einfluss zumindest einer in bzw. über eine Vulkanisationsvorrichtung wirkenden Wärmequelle vulkanisiert werden. Dabei werden Kautschukmischungen mit unterschiedlicher Vulkanisationsgeschwindigkeit schichtweise so aufgebracht, dass die Vulkanisationsgeschwindigkeit dieser Schichten mit steigender Entfernung von der bzw. den Wärmequellen der Vulkanisationsvorrichtung zunimmt.

## Beschreibung

Die gegenständliche Erfindung betrifft ein Verfahren zur Herstellung von Gummiartikeln, die aus vulkanisierbaren Kautschukmischungen bestehen, welche unter dem Einfluss zumindest einer in bzw. über eine Vulkanisationsvorrichtung wirkenden Wärmequelle vulkanisiert werden. Die Erfindung betrifft ferner gemäß diesem Verfahren hergestellte Gummiartikel, insbesondere Fahrzeugluftreifen.

Im Unterschied zu thermoplastischen Kunststoffen, deren Molekülstruktur schon endgültig bei ihrer Herstellung aufgebaut wird und die bei der Verarbeitung lediglich thermoplastisch verformt werden, werden bei der Herstellung von Gummiartikeln Kautschukmischungen verwendet, die vorerst relativ niedermolekulare, noch plastisch verformbare Polymere verwenden, die bei Temperaturen unterhalb der Reaktions- bzw. Vernetzungstemperatur mit Vernetzungsmitteln versetzt werden, vor der Vernetzung verformt, in die erwünschte Gestalt gebracht und anschließend durch Quervernetzung (Vulkanisation) in dieser Gestalt fixiert werden. Kautschukmischungen werden daher während der Vulkanisation aus dem vorwiegend plastischen in den vorwiegend elastischen Zustand übergeführt. Dies geschieht üblicherweise durch ein Erhitzen auf Temperaturen im Bereich von 150 bis 200° Celsius, wobei die Vulkanisationsdauer je nach Dicke des Artikels und auch je nach Temperatur zwischen einigen Minuten und einigen Stunden dauern kann.

Da Gummi ein schlechter Wärmeleiter ist und die Vernetzungsreaktion erst einsetzt, wenn eine bestimmte Temperatur über eine gewisse Zeit gewirkt hat, ist man bei der Vulkanisation von Gummiartikeln oft mit dem Problem konfrontiert, die erforderliche Wärme möglichst schnell an die jeweils kritischen, dies sind die von der Wärmequelle oder den Wärmequellen weiter entfernten Bereiche, zu bekommen.

Ein besonderes Problem besteht bei der Vulkanisation von Kautschukmischungen auf der Basis von Naturkautschuk, da die Eigenschaften der aus solchen Mischungen hergestellten Vulkanisate von der Zeitdauer des Vulkanisationsprozesses und der Höhe der wirkenden Vulkanisationstemperatur abhängen. Das mechanische Eigenschaftsbild solcher Mischungen ist am günstigsten, wenn bei möglichst niedriger Gesamtwärmebelastung der jeweils optimale Vulkanisationsgrad erreicht wird.

Im Verlauf der Vulkanisation von Kautschukmischungen auf der Basis von Naturkautschuk wird vom Eigenschaftsbild her gesehen zunächst das Optimum bezüglich Kerbzähigkeit, dann bezüglich Festigkeit und schließlich bezüglich der elastischen Eigenschaften erreicht bzw. durchlaufen. Wird nun der Vulkanisationsvorgang nicht rechtzeitig beendet, kommt es nach dem Durchlaufen dieser Stadien zu einer Reversion, in dem sich die Eigenschaften insofern wieder verschlechtern, als sich die dynamische Steifigkeit verringert, der Verlustwinkel hingegen erhöht wird.

Dieses Problem wird umso gravierender, je länger die Vulkanisation dauert und je höher die dabei wirkende Temperatur ist.

Eine besondere Bedeutung hat dabei dieses Problem bei der Herstellung dickwandiger Gummiartikel, beispielsweise bei LKW-Reifen, insbesondere in deren Laufstreifenbereichen. Durch die unvermeidliche Übervulkanisation und der damit zwangsläufig verbundenen Reversion der elastischen Eigenschaften wird der für den Treibstoffverbrauch maßgebende Rollwiderstand der Reifen erhöht.

Es ist nun bekannt, die Vulkanisationsgeschwindigkeit von Mischungen durch den oder die eingesetzten Vulkanisationsbeschleuniger zu beeinflussen. Die beschleunigende Wirkung dieser Substanzen hängt auch mit dem Zusatz anderer Stoffe, den Aktivatoren, zusammen, wobei üblicherweise Zinkoxid, dessen Wirkung durch die Beimengung von Stearinsäure verstärkt wird, beigegeben wird. Beschleuniger sind meist organische Substanzen, die, je nach ihrer Zusammensetzung, von ihrer Wirkung her von langsam wirkend bis sehr schnell wirkend eingestuft werden können, wobei es auch Beschleuniger mit sogenannter verzögerter Wirkung gibt. Dabei ist bei der Herstellung der Mischung darauf zu achten, dass keine Umstände eintreten, bei denen eine vorzeitige Vernetzung, die die Mischungen unbrauchbar machen würde, erfolgt.

Durch die Wahl des Beschleunigers kann man daher bei einer langsamen Vulkanisationseinstellung die Reversion an der Oberfläche des Vulkanisates, beispielsweise der Oberfläche des Laufstreifens eines Reifens, zwar vermindern, man muss jedoch die Gesamtvulkanisationszeit erhöhen, während bei einer schnellen Vulkanisationseinstellung eine verstärkte Reversion der Eigenschaften, wie oben beschrieben, erfolgt.

Die Erfindung hat sich nun die Aufgabe gestellt, ein Verfahren zur Herstellung von Gummiartikeln vorzuschlagen, durch welches die geschilderten Probleme im Zusammenhang mit einem ungleichmäßigen Vulkanisationsgrad zumindest weitgehend gelöst werden.

Die gestellte Aufgabe wird erfindungsgemäß dadurch gelöst, dass Kautschukmischungen mit unterschiedlicher Vulkanisationsgeschwindigkeit schichtweise so aufgebracht werden, dass die Vulkanisationsgeschwindigkeit dieser Schichten mit steigender Entfernung von der bzw. den Wärmequellen der Vulkanisationsvorrichtung zunimmt.

Auf diese Weise ist es möglich, dicker ausgeführte Gummiartikel oder jene Bereiche von Gummiartikeln, die dicker ausgeführt sind, wie beispielsweise Laufstreifen von LKW-Reifen, mit einem gegenüber der bekannten Technologie wesentlich gleichmäßigeren Vulkanisationsgrad herzustellen.

Die Vulkanisationsgeschwindigkeit der schichtweise aufgebrachten Kautschukmischungen lässt sich auf einfache Weise durch die Auswahl des der jeweiligen Mischung zugefügten Beschleunigers einstellen.

Von den Schichten mit unterschiedlicher Vulkanisationsgeschwindigkeit werden zumindest zwei vorgesehen, die je nach Anwendung und auch nach Gummiartikel bis auf den Beschleuniger aus übereinstimmenden Kautschukmischungen hergestellt sein können.

Alternativ dazu können diese Schichten auch aus unterschiedlichen Kautschukmischungen, die sich insbesondere im Polymersystem voneinander unterscheiden, hergestellt werden.

Je nach Polymersystem kann es dabei auch von Vorteil sein, wenn einer dieser Kautschukmischungen eine Kombination verschiedener Beschleuniger enthält.

Dabei können die Kautschukmischungen in Form von Platten oder Profilen, entweder kalt oder warm, aufgebracht werden. Dabei ist insbesondere darauf zu achten, dass kein unerwünschtes Anvulkanisieren der Mischungen stattfindet.

Wenn nach einem weiteren Merkmal der Erfindung die Kautschukmischungen unterschiedlicher Vulkanisationsgeschwindigkeit unmittelbar vor ihrer Verwendung hergestellt werden, kann eine Kühlung der Mischung unterbleiben.

Um ein gleichmäßiges Verteilen bzw. Vermischen des Beschleunigers in der Kautschukmischung zu unterstützen, ist es von Vorteil, wenn diese aus zwei Grundmischungen hergestellt wird, von welcher die eine Beschleuniger aber keinen Schwefel, die andere Schwefel aber keinen Beschleuniger enthält, und die miteinander vermischt werden. Ein besonders effektives Vermischen von Grundmischungen für die schichtweise aufzubringenden Kautschukmischungen ist in einem Doppelschneckenextruder möglich.

Die gegenständliche Erfindung betrifft ferner einen Gummiartikel, insbesondere einen Fahrzeugluftreifen, welcher nach dem erfindungsgemäßen Verfahren hergestellt wird.

Bei einem erfindungsgemäß hergestellten Fahrzeugluftreifen besteht insbesondere der Laufstreifen aus zumindest zwei radial übereinander angeordneten Schichten aus Kautschukmischungen mit unterschiedlicher Vulkanisationsgeschwindigkeit. Bei der für Laufstreifen von LKW- Reifen üblichen Dicke wird mit drei unterschiedlichen Schichten von Kautschukmischungen bereits ein sehr gutes Ergebnis erzielt, ohne dass dabei der Herstellungsprozess nennenswert beeinflusst würde.

Ein möglichst gleichmäßiger Vulkanisationsgrad über die Gesamtstärke des Laufstreifen wird ferner noch dadurch unterstützt, wenn die Schichten unterschiedlich dick ausgeführt sind, wobei die dünnste Schicht die radial äußerste ist.

Um auch in den Schulterbereichen des Reifens einen möglichst gleichmäßigen Vulkanisationsgrad zu gewährleisten, werden die Schichten erfindungsgemäß so aufgebracht, dass jeweils eine radial weiter außen angeordnete Schicht die darunter liegende Schicht auch in den seitlichen Bereichen überdeckt.

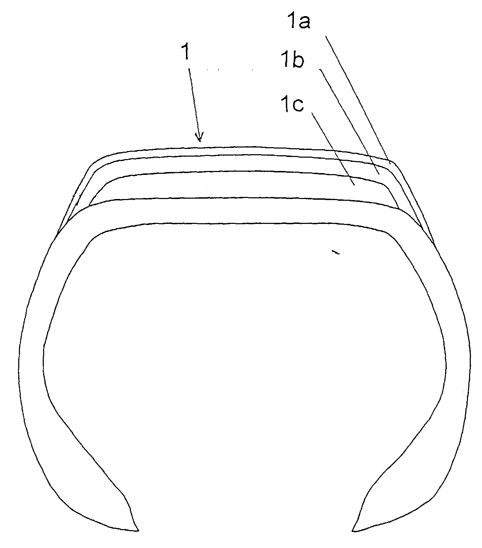

Weitere Merkmale, Vorteile und Einzelheiten der Erfindung werden nun anhand der nachfolgenden Beschreibung und des in der einzigen Zeichnungsfigur dargestellten Ausführungsbeispieles näher beschrieben. Dabei zeigt die einzige Zeichnungsfigur schematisch einen Querschnitt durch einen noch unvulkanisierten LKW-Reifen mit einer möglichen Ausführungsform der Erfindung.

Die Vulkanisation von Fahrzeugluftreifen erfolgt üblicherweise in Heizpressen, wobei der Reifen von einer mehrteiligen Vulkanisationsform aufgenommen wird, die mittels vorspringender Stege, Lamellenbleche und dergleichen die Profilierung im Laufstreifen mit Rillen, Einschnitten usw. ausgebildet. Der in das Innere der Vulkanisationsform eingebrachte Reifen wird bei geschlossener Heizpresse von Innen her über ein unter entsprechendem Druck eingeleitetes Heizmedium, dies kann ein flüssiges Heizmedium, wie Heißwasser, oder ein gasförmiges Heizmedium, wie Dampf, sein, erhitzt. Je nach Ausführungsform der Heizpresse kann dabei das Heizmedium direkt auf die Innenfläche des Reifens wirken, oder es kann ein Heizbalg zwischengeschaltet sein. Auch von außen erfolgt eine Zufuhr von Wärme, üblicherweise mittels in der Heizpresse untergebrachter Heizplatten. Das Vulkanisieren - das Vernetzen der Kautschukmoleküle - erfolgt zuerst in jenen Bereichen des Reifens, die nahe dem wirkenden Heizmedium bzw. den Wärmequellen liegen. Infolge der schlechten Wärmeleitfähigkeit von Gummi bzw. Kautschuk dauert es relativ lange, bis auch die von den wirkenden Wärmequellen am weitesten entfernt liegenden Bereiche des zu vulkanisierenden Reifens erreicht sind. Diese Bereiche sind die Schulter- und Laufstreifenbereiche des Reifens.

Gemäß der gegenständlichen Erfindung werden nun solche kritischen Bereiche in Gummiartikeln schichtförmig aus Kautschukmischungen aufgebaut, die unterschiedliche Vernetzungsgeschwindigkeiten haben, wobei die vom jeweiligen Heizmedium, der Wärmequelle, am weitesten entfernt liegenden Bereiche aus jener Kautschukmischung bestehen, die vergleichsweise schnell bzw. am schnellsten vulkanisiert .

Die einzige Zeichnungsfigur zeigt nun einen derartigen schichtweisen Aufbau aus Kautschukmischungen für den Laufstreifen 1 eines LKW-Reifens. Die sonstigen Bauteile des als Radialreifen ausgeführten Reifens, wie die Radialkarkasse, die Wulstkerne in den Wulstbereichen und der aus mehreren Lagen bestehende Stahlgürtel, sind nicht eingezeichnet, da der LKW-Reifen in herkömmlicher Art und Weise aufgebaut sein kann. Der rohe Laufstreifen 1 des LKW-Reifens ist aus drei in radialer Richtung übereinander aufgebrachten Schichten 1a, 1b, 1c aufgebaut. Dabei kann der rohe Laufstreifen 1 mit diesen Schichten 1a, 1b,1c bereits entsprechend vordubliert sein und somit wie ein herkömmlicher Laufstreifen bei der Herstellung des Reifens aufgebracht werden.

Die Schichten 1a, 1b, 1c, besitzen nun unterschiedliche Breiten, derart, dass die radial innerste Schichte am schmälsten ausgeführt ist und nicht bis in die Schulterbereiche nach außen reicht. So können die beiden weiteren Schichten 1b und 1a so angeordnet werden, dass sie ihre jeweils überdeckende Schicht 1c, 1b auch seitlich an den Schultern überlappen, wobei die radial äußerste Schicht 1a bis zu den Seitenwänden reicht.

Darüber hinaus sind die Schichten 1a, 1b, 1c auch in unterschiedlicher Dicke ausgeführt, wobei die radial äußerste Schichten 1a die dünnste, die radial innerste Schicht 1c die stärkste ist. Über einen Großteil der jeweiligen Breite der Schichten 1a, 1b, 1c sind diese vorzugsweise so ausgeführt, dass die mittlere Schicht 1b ca. doppelt so dick ist wie die äußerste Schicht 1a und die innerste Schicht 1c die 3-fache Stärke der Schicht 1a aufweist. Bei einem LKW- Reifen können die tatsächlichen Schichtstärken etwa 3mm, 6mm und 12 mm betragen.

Die Schichten 1a, 1b, 1c bestehen insbesondere aus weitgehend übereinstimmenden Kautschukmischungen. Der einzige Unterschied besteht im zugesetzten Beschleuniger. In der nachfolgenden Tabelle sind Beispiele für Mischungsrezepturen der Kautschukmischungen für die Schichten 1a, 1b, 1c enthalten, wobei sich die in den Mischungsbeispielen angegebenen Anteile jeweils auf 100 Gewichtsteile Kautschuk in der Mischung beziehen.

| ***Mischungsbestandteile*** | | ***Mischung für Schicht 1a*** | ***Mischung für Schicht 1b*** | ***Mischung für Schicht 1c*** |
|---|---|---|---|---|
| Naturkautschuk | | 100 | 100 | 100 |
| Ruß N220 | | 48 | 48 | 48 |
| Stearinsäure (ZNO) | | 5,0 | 5,0 | 5,0 |
| 6 PPD (Alterungsschutzmittel) | | 1,5 | 1,5 | 1,5 |
| Paraffin (Lichtschutzmittel) | | 1,0 | 1,0 | 1,0 |
| Mineralöl, aromatisch | | 5 | 5 | 5 |
| Schwefel | | 2 | 2 | 2 |
| Beschleuniger | MBTS* | | | 0,8 |
| | CBS** | | 0,8 | |
| | DCBS*** | 0,8 | | |

| | | | | |
|---|---|---|---|---|
| * Dibenzothiazyl Disulfid (Thiazolbeschleuniger) | | | | |
| ** N- Zyclohexyl-2-benzothiozylsulfenamid (Sulfenamid- Beschleuniger) | | | | |
| *** N- Dizyclohexyl-2-benzothiozylsulfenamid (Sulfenamid- Beschleuniger) | | | | |

Von allen drei Beschleunigern ist MBTS jener Beschleuniger, der den Vernetzungsprozess am schnellsten ablaufen lässt. Der langsamste dieser Beschleuniger ist DCBS. Jene Kautschukmischung bzw. jene Schicht 1c mit dem am schnellsten vernetzenden Beschleuniger ist nun im Reifen dort untergebracht, wo die größte Entfernung von den von außen auf den Reifen wirkenden Wärmequellen gegeben ist, wobei durch den radial innerhalb der Schicht 1c befindlichen Aufbau des Reifens- Innenplatte, Karkasse, Gürtel- die Schicht 1c sowohl von der Innenseite als auch der Außenseite etwa gleich weit entfernt ist.

Dabei wird diesen Mischungen Beschleuniger in den üblichen Anteilen zugefügt. Es können auch andere als die oben erwähnten Beschleuniger eingesetzt werden, solange auf die erwünschte Vernetzungsgeschwindigkeit und den erwünschten Vernetzungsgrad Bedacht genommen wird.

Gemäß der gegenständlichen Erfindung ist daher sichergestellt, dass in jenen Laufstreifenbereichen, wo auf Grund der schlechten Wärmeübertragung eine relativ lange Zeitspanne vergeht, bis die zur Vulkanisation erforderliche Wärme übertragen ist, die Vulkanisation, der Vernetzungsprozess, schneller abläuft als in jenen Bereichen, wo die zur Vulkanisation erforderliche Wärme schon früher bzw. etwas früher wirkt. Damit kann gewährleistet werden, dass die eingangs erwähnten Nachteile mit einer zu langen Gesamtwärmebelastung einher gehen, zumindest weitgehend vermieden werden. Dabei ist dieses Problem besonders bei Kautschukmischungen auf der Basis von Naturkautschuk gegeben, da gerade bei dieser Kautschuktype die Eigenschaften der hergestellten Vulkanisate von der Zeitdauer und der Temperatur bei der Vulkanisation stark abhängen.

Erwähnt sei ferner, dass beim Einformvorgang, beim Schließen der Vulkanisationsform, zwar lokale Verformungen im Laufstreifen und somit entsprechende Verschiebungen und Verformungen der Schichten 1a, 1b, 1c stattfinden, diese jedoch kaum Auswirkungen auf die geschilderte Wirkungsweise haben.

Selbstverständlich ist die gegenständliche Erfindung bei einer Vielzahl anderer Gummiartikel anwendbar und daher nicht nur auf die Herstellung von Reifen beschränkt. Einige weitere vorteilhafte Aspekte und Ausführungsmöglichkeiten, die bei sämtlichen Anwendungen der gegenständlichen Erfindung zum Tragen kommen können, werden nachfolgend beschrieben.

So ist es grundsätzlich möglich, die rohen Kautschukmischungen, die schichtweise aufgebracht werden, in Form von Platten oder Profilen aufzubringen, wobei die hergestellten Mischungen vorab einem Kühlprozess unterzogen werden können, um in jedem Fall ein unerwünschtes Anvulkanisieren zu vermeiden. Alternativ dazu können die Kautschukmischungen auch unmittelbar nach ihrer Herstellung und insbesondere daher auch warm aufgebracht werden.

Um eine gleichmäßige Verteilung der doch eher in geringen Mengen zugesetzten Beschleuniger sicherzustellen, ist es von Vorteil, wenn zwei grundsätzlich übereinstimmende Grundmischungen hergestellt werden, wobei der einen Grundmischung kein Beschleuniger und der zweiten Grundmischung kein Schwefel beigemengt wird. Diese beiden Grundmischungen können dann in gleichen oder auch in unterschiedlichen Mengenverhältnissen miteinander vermischt werden.

Im Rahmen der gegenständlichen Erfindung ist es auch möglich, in jeder Kautschukmischung der einzelnen Schichten unterschiedliche Beschleuniger zu kombinieren. Die Erfindung lässt sich ferner auch auf Vulkanisate anwenden, wo die einzelnen Schichten aus Kautschukmischungen bestehen, die auf unterschiedlichen Polymersystemen basieren. Hier ist es dem Fachmann überlassen, durch die Auswahl und den für das jeweilige Polymersystem optimalen Anteil an Beschleuniger sicherzustellen, dass der erwünschte Effekt der unterschiedlichen Vernetzungsgeschwindigkeit eintritt.

Werden zwei oder mehrere Mischungen bei der Herstellung der aufzubringenden Mischung verwendet, so können diese auf wirkungsvolle Weise auch in einem Doppelschneckenextruder vermischt werden.

## Patentansprüche

1. Verfahren zur Herstellung von Gummiartikeln aus vulkanisierbaren Kautschukmischungen, welche unter dem Einfluss zumindest einer in bzw. über eine Vulkanisationsvorrichtung wirkenden Wärmequelle vulkanisiert werden, dadurch gekennzeichnet, dass Kautschukmischungen mit unterschiedlicher Vulkanisationsgeschwindigkeit schichtweise so aufgebracht werden, dass die Vulkanisationsgeschwindigkeit dieser Schichten mit steigender Entfernung von der bzw. den Wärmequellen der Vulkanisationsvorrichtung zunimmt.

2. Verfahren nach Anspruch 1, dass die Vulkanisationsgeschwindigkeit der Mischungsschichten durch die Auswahl des der jeweiligen Mischung zugefügten Beschleunigers bestimmt wird.

3. Verfahren nach Anspruch 1 oder 2, dadurch gekennzeichnet, dass zumindest zwei Schichten von Kautschukmischungen unterschiedlicher Vulkanisationsgeschwindigkeiten vorgesehen werden.

4. Verfahren nach einem der Ansprüche 1 bis 3, dadurch gekennzeichnet, dass die Schichten bis auf den Beschleuniger aus übereinstimmenden Kautschukmischungen hergestellt werden.

5. Verfahren nach einem der Ansprüche 1 bis 3, dadurch gekennzeichnet, dass die Schichten auch aus unterschiedlichen Kautschukmischungen, insbesondere aus solchen mit unterschiedlichen Polymersystemen, hergestellt werden.

6. Verfahren nach einem der Ansprüche 1 bis 5, dadurch gekennzeichnet, dass die Kautschukmischung einer Schicht eine Kombination verschiedener Beschleuniger enthält.

7. Verfahren nach einem des Ansprüche 1 bis 6 dadurch gekennzeichnet, dass die Kautschukmischungen für die Schichten in Form von Platten oder Profilen, entweder kalt oder warm, aufgebracht werden.

8. Verfahren nach einem der Ansprüche 1 bis 7, dadurch gekennzeichnet, dass die Kautschukmischungen unterschiedlicher Vulkanisationsgeschwindigkeit unmittelbar vor ihrer Verwendung hergestellt werden.

9. Verfahren nach einem der Ansprüche 1 bis 8, dadurch gekennzeichnet, dass die Kautschukmischung für eine dieser Schichten durch ein Vermischen von zumindest zwei zumindest im Wesentlichen übereinstimmenden Grundmischungen, von welcher die eine Beschleuniger aber keinen Schwefel, die andere Schwefel aber keinen Beschleuniger enthält, hergestellt wird.

10. Verfahren nach einem der Ansprüche 1 bis 9, dadurch gekennzeichnet, dass die Kautschukmischung für eine dieser Schichten durch ein Vermischen von zumindest zwei Mischungen unterschiedlicher Vulkanisationsgeschwindigkeit in einem Doppelschneckenextruder hergestellt wird.

11. Gummiartikel hergestellt nach dem Verfahren gemäß zumindest einem der Ansprüche 1 bis 10.

12. Fahrzeugluftreifen, hergestellt nach dem Verfahren gemäß zumindest einem der Ansprüche 1 bis 11.

13. Fahrzeugluftreifen nach Anspruch 12, dadurch gekennzeichnet, dass der Laufstreifen (1) aus zumindest zwei, insbesonders aus drei radial übereinander angeordneten Schichten (1a, 1b, 1c) aus Kautschukmischungen, vorzugsweise auf der Basis von Naturkautschuk, mit unterschiedlicher Vulkanisationsgeschwindigkeit hergestellt ist.

14. Fahrzeugluftreifen nach Anspruch 12 oder 13, dadurch gekennzeichnet, dass die Schichten (1a, 1b, 1c) unterschiedlich dick ausgeführt sind, wobei die dünnste Schicht die radial äußerste ist.

15. Fahrzeugluftreifen nach Anspruch 12 bis 14, dadurch gekennzeichnet, dass jeweils eine radial weiter außen angeordnete Schicht (1a, 1b) die darunter liegende Schicht (1b, 1c) auch in den seitlichen Bereichen überdeckt.
